(19) Europäisches Patentamt
European Patent Office
Office européen des brevets

(11) **EP 4 080 836 B1**

(12) **EUROPEAN PATENT SPECIFICATION**

(45) Date of publication and mention
of the grant of the patent:
**21.06.2023 Bulletin 2023/25**

(21) Application number: **21169634.9**

(22) Date of filing: **21.04.2021**

(51) International Patent Classification (IPC):
*H04L 45/24* (2022.01)    *H04L 47/125* (2022.01)
*H04L 45/125* (2022.01)    *H04L 45/42* (2022.01)
*H04L 45/00* (2022.01)    *H04L 47/11* (2022.01)
*H04L 47/2408* (2022.01)    *H04L 47/27* (2022.01)
*H04L 47/283* (2022.01)    *H04L 47/30* (2022.01)

(52) Cooperative Patent Classification (CPC):
**H04L 45/24; H04L 47/125;** H04L 45/125;
H04L 45/42; H04L 45/70; H04L 47/11;
H04L 47/2408; H04L 47/27; H04L 47/283;
H04L 47/30

(54) **SYSTEM AND METHOD FOR MULTIPATH TRANSMISSION**

SYSTEM UND VERFAHREN ZUR MEHRWEGÜBERTRAGUNG

SYSTÈME ET PROCÉDÉ DE TRANSMISSION À TRAJETS MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.10.2022 Bulletin 2022/43**

(73) Proprietor: **Deutsche Telekom AG
53113 Bonn (DE)**

(72) Inventors:
• **AMEND, Markus
63667 Nidda (DE)**
• **BOGENFELD, Dr. Eckard
67316 Carlsberg (DE)**

• **BRUNSTROM, Anna
65637 Karlstad (SE)**
• **PIESKA, Marcus
65464 Karlstad (SE)**
• **KASSLER, Prof. Andreas
65635 Karlstad (SE)**

(74) Representative: **Vossius & Partner
Patentanwälte Rechtsanwälte mbB
Siebertstraße 3
81675 München (DE)**

(56) References cited:
**US-A1- 2017 070 438    US-A1- 2017 156 078
US-A1- 2021 014 171**

## Description

Technical Field

The disclosure relates to techniques for scheduling data traffic for transmission over multiple paths from which at least one path is of a first type, in particular a cheap data path and at least another path is of a second type, in particular an expensive data path. The disclosure further relates to a multipath scheduler and a method for scheduling multipath data traffic. In particular, the invention relates to a system, a scheduler device, and a method to receive packets from a sender and transmit packets to a receiver over a communications network as defined in the independent claims.

Background of the Invention

Several multipath protocols like Multipath Transmission Control Protocol, MPTCP according to " A. Ford and C. Raiciu and M. Handley and O. Bonaventure, "TCP Extensions for Multipath Operation with Multiple Addresses", RFC no. 6824, January 2013" [1], Quentin Coninck and Olivier Bonaventure, "Multipath Extensions for QUIC (MP-QUIC)", draft-deconinck-quic-multipath-05, August 2020 [2], Markus Amend and Anna Brunstrom and Andreas Kassler and Veselin Rakocevic, "DCCP Extensions for Multipath Operation with Multiple Addresses", draft-amend-tsvwg-multipath-dccp-03, Nov 2019 [3], and many others offer capacity aggregation over several paths. These paths may have different costs, e.g. cheap and expensive or expressed in other terms. For example, the cheap path may be a WiFi path and the expensive path may be an LTE (Long Term Evolution) path. Cost does not inevitably mean a direct payment, it can also be defined in terms of latency, reliability and many other metrics.

Multipath network protocols such as MPTCP [1], MP-DCCP [3] or MP-QUIC [2] allow to establish more than one communication flow between a sender and a receiver. Fig. 1 shows a sender, i.e. a transmitting device, and a receiver (receiving device). Multiple paths 1 to n are established between the sender and the receiver. A generator generates data packets 1 to 15 that pass a sequencing module which assigns each packet a respective sequence number. The sequenced data packets are passed to a scheduler which schedules the data packets to the multiple paths of a multipath channel. The data packets ordered in sequence 12, 13, 14 are transmitted over the multipath channel.

On sender side that gives the ability to decide how to schedule the traffic across these communication paths 1-n depicted in Fig. 1. An efficient scheduling is relied on a proper path estimation, which characterizes the transport capabilities of the communication paths like available bandwidth or Round-Trip-Time, RTT. Using [1]-[3], will gain these values from the employed congestion control approach like New Reno, Cubic, BBR etc.

Most often, the goal of multipath scheduling is the cost-efficient distribution of traffic utilizing the less expensive communication flow first. Such class of schedulers are referred to as cheapest-pipe-first, CPF, scheduler and are known from EP 3 544 332 A1 [4] or EP 3 579 500 A1 [5], and [9]. Both will traditionally use the send congestion window, which represents the remaining path capacity, for scheduling decisions when used with [1]-[3].

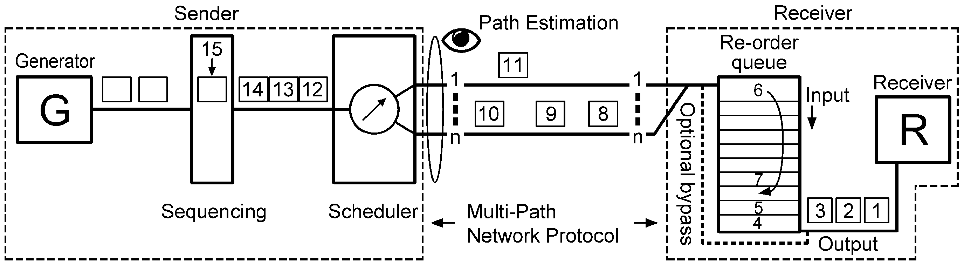

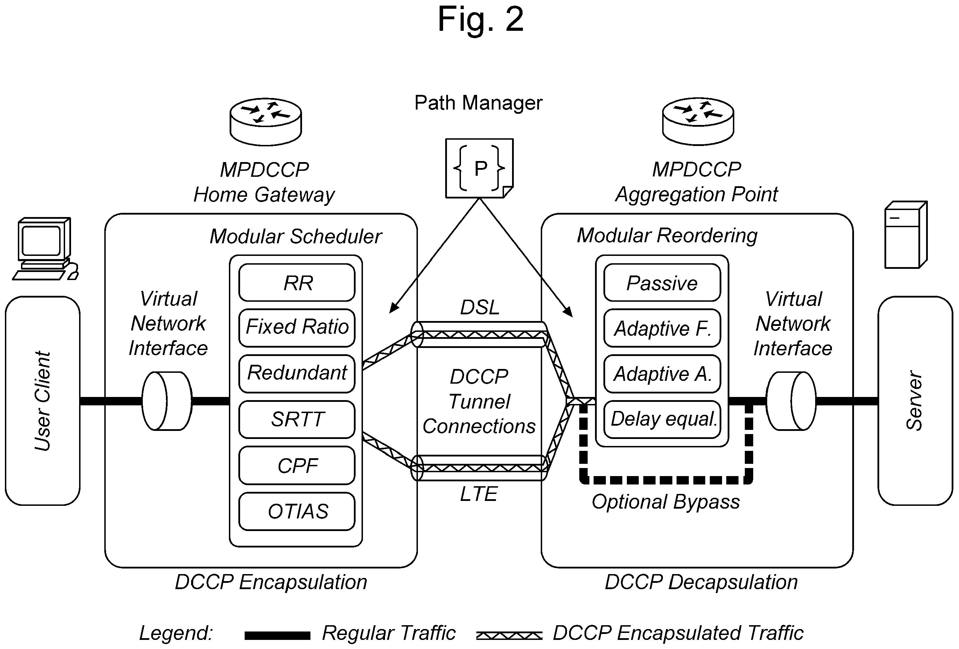

While EP 3 544 332 A1 or EP 3 579 500 A1 often do their job well, there are situations where they make not efficiently use of multipath resources when it comes to aggregation of communication paths. Such a particular scenario approaches when the communication flow individual send- or netdevice-buffer (bottleneck buffer) tend to absorb usually overflowing traffic or fractions of it. This becomes problematic when the service piggybacked over the multipath systems will adjust its throughput based on capacity measurements of the first communication flow spuriously considering the bottleneck buffer as part of this. This can lead to the fact that the first communication path is considered solely as sufficient without raising any demand to trigger an overflow into the second communication path. Fig. 2 depicts a multipath architecture that relies on MP-DCCP for multipath transmission of an E2E service between Client and Server. The Virtual Network Interface will ensure the E2E service communication over multiple paths by forwarding the traffic over the MP-DCCP system. That is, any information routed/send through the VNIF will be dispatched to the MP-DCCP system where it becomes encapsulated and scheduled across the DCCP communication paths. On the MP-DCCP receiver side the encapsulated information passes a reordering process and the original information - after removing the encapsulation overhead - exits the VNIF to become forwarded to the original destination. Two communication paths "DSL" and "LTE" are assumed here, as depicted in Fig. 2, which both have at least a MAC-layer buffer corresponding to the aforementioned bottleneck buffer. An overflow in the CPF scheduler from a first communication path into a second one is triggered when the incoming data rate at the VNIF is higher than the assumed capacity of the first communication path.

A similar framework employing the QUIC protocol [9] is implementable using the MP-QUIC [2] instead of MP-DCCP, the work at QUIC MASQUE [7] for encapsulation (VNIF) and QUIC DATAGRAM [8] for unreliable transmission - the nature of DCCP.

US 2017/156078 A1 relates to a method for managing congestion in a first node in a wireless communication system including: receiving status information from each of nodes configuring a network with the first node, receiving information about a service requirement criterion from a second node as one of the nodes, acquiring additional path setup information for the second node based on the status information received from each of the nodes and the information about the service requirement criterion received from the second node, and transmitting the acquired additional path setup information to the second node. US 2021/014171 A1 relates to a multipath scheduler device for scheduling data traffic including: at least one first type data path; at least one second type data path; and a scheduler configured to schedule a first portion of the data traffic for transmission via the at least one first type data path and to schedule a second portion of the data traffic for delayed transmission via the at least one second type data path.

It is the object of the present invention to provide a concept for solving the above-mentioned problem when transmitting data packets over a multipath channel. A further object of the present invention is to introduce a system and method to avoid an underutilization of a second path for communication.

The foregoing and other objects are achieved by the subject matter of the independent claims. Further implementation forms are apparent from the dependent claims, the description and the figures.

Summary of the Invention

The invention is defined in independent claims 1, 9 and 10.

Preferred or advantageous aspects are defined in the dependent claims.

In an embodiment, the present invention assumes a setup similar to the one shown in Fig. 2 with exemplary TCP BBR or DCCP CCID5 (BBR for DCCP) as the congestion control mechanism for the multipath communication flows, while E2E services across the multipath setup with different congestion control mechanisms are evaluated comparing the effect of a conventional approach known from the prior art and the scheduler according to the invention.

In another embodiment, the present invention assumes multipath E2E and/or multipath network protocols other than MPTCP or MP-DCCP, such as SCTP, MP-QUIC or GRE bonding.

A main idea presented in this disclosure is to change the order how bottleneck buffers will be utilized. The usual way to fill a communication flow inclusive the bottleneck buffer is given up in favor of utilizing the communication flows first before bottleneck buffer are allowed to be used.

This requires knowledge about the communication flow bottleneck buffer and the determination of this buffer level inside the multipath scheduler. The multipath scheduler then has to force the usage of a second communication flow dependent on the incoming data rate and the fill level of the bottleneck of the first communication flow, avoiding any buffer usage of the first communication flow, which prevents the system of making efficiently use of the second communication flow. It is therefore required to monitor the buffer fill level and decide according to a threshold to switch from the currently used communication path to a secondary one.

According to a first aspect, the invention provides a multi-access scheduler system configured to receive packets from a sender and transmit packets to a receiver over a communications network. The multi-access scheduler system comprises a multipath scheduler configured to schedule data traffic for transmission via a first type data path having a first capacity and a second type data path having a second capacity, the first type data path comprising a first bottleneck buffer and the second type data path comprising a second bottleneck buffer. The multipath scheduler is configured to schedule packets on the first type data path, unless the capacity of the first type data path is full. Furthermore, the multipath scheduler is configured to monitor the first bottleneck buffer level and if the capacity of the first type data path is full and the first bottleneck buffer level starts to grow, the multipath scheduler is configured to schedule packets on the second type data path until the capacity of the second path is full.

According to a preferred embodiment, the multipath scheduler is configured to use a congestion window, CWND, on a per type data path basis and/or a type data path overarching manner, to control first bottleneck buffer usage.

In a still further preferred embodiment, the multipath scheduler is configured to determine the size of the CWND by applying a factor $0 \leq F \leq 1$ to the size of the CWND based on the bandwidth delay product $RTT_{min} * BW * G$, wherein $RTT_{min}$ is the minimum round trip time, BW is the bandwidth, and G is a gain.

It is preferred that the multi-access scheduler system further comprises a scheduler buffer.

The multipath scheduler is preferably configured to monitor a status of the scheduler buffer and adapt the scheduling based on the content and/or fill level of the scheduler buffer.

The multipath scheduler is preferably configured to apply RTT information gained by sender and receiver signaling to determine that the capacity of the first type data path is exhausted and/or use the RTT information for additional scheduling decisions.

In a still preferred embodiment, the multipath scheduler is configured to receive, from the communications network, a congestion notification, the congestion notification indicating the presence of a growing or full bottleneck queue in the first type data path; and switch the scheduling of packets from the first type data path to the second type data path even if the first type data path buffer is not full.

If the capacity of the first type data path and the second type data path is exhausted, the multipath scheduler is preferably configured to schedule the packets in the first bottleneck buffer of the first type data path and/or second bottleneck buffer of the second type data path.

According to a preferred aspect of the invention, the fill level of the first bottleneck buffer is adjusted by a configurable threshold level, wherein when the threshold level is reached or surpassed, the multipath scheduler is configured to change the scheduling of packets from the first type data path to the second type data path.

According to a second aspect, the invention provides a multipath scheduler device for scheduling data traffic for transmission via a first type data path having a first capacity and a second type data path having a second capacity, the first type data path comprising a first bottleneck buffer and the second type data path comprising a second bottleneck buffer. The multipath scheduler is configured to schedule packets on the first type data path, unless the capacity of the first type data path is full. The multipath scheduler is configured to monitor the first bottleneck buffer level and if the capacity of the first type data path is full and the first bottleneck buffer level starts to grow, the multipath scheduler is configured to schedule packets on the second type data path until the capacity of the second path is full.

According to a third aspect, the invention provides a method for scheduling multipath data traffic for transmission via a first type data path having a first capacity and a second type data path having a second capacity, the first type data path comprising a first bottleneck buffer and the second type data path comprising a second bottleneck buffer. The method comprises scheduling packets on the first type data path, unless the capacity of the first type data path is full; monitoring the first bottleneck buffer level; and if the capacity of the first type data path is full and the first bottleneck buffer level starts to grow, scheduling packets on the second type data path until the capacity of the second path is full.

Preferably, the method further comprises using a congestion window, CWND, on a per type data path basis and/or a type data path overarching manner, to control first bottleneck buffer usage.

Further preferred, the method comprises determining the size of the CWND by applying a factor $0 \leq F \leq 1$ to the size of the CWND based on the bandwidth delay product $RTT_{min} * BW * G$, wherein $RTT_{min}$ is the minimum round trip time, BW is the bandwidth, and G is a gain.

According to a still further preferred aspect, the method further comprises monitoring a status of a scheduler buffer and adapt the scheduling based on the content and/or fill level of the scheduler buffer.

The method preferably further comprises applying RTT information gained by sender and receiver signaling to determine that the capacity of the first type data path is exhausted and/or use the RTT information for additional scheduling decisions.

The appended drawings assist in understanding the invention. The drawings illustrate:

Fig. 1        a communication flow between a sender and a receiver;
Fig. 2        an MP-DCCP framework;
Fig. 3        a high-level illustration of the scheduler;
Fig. 4        a comparison between the prior art approach and the approach according to the invention; and
Figs 5 to 10    the improvement of the scheduler according to the present invention.

Description of embodiment

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

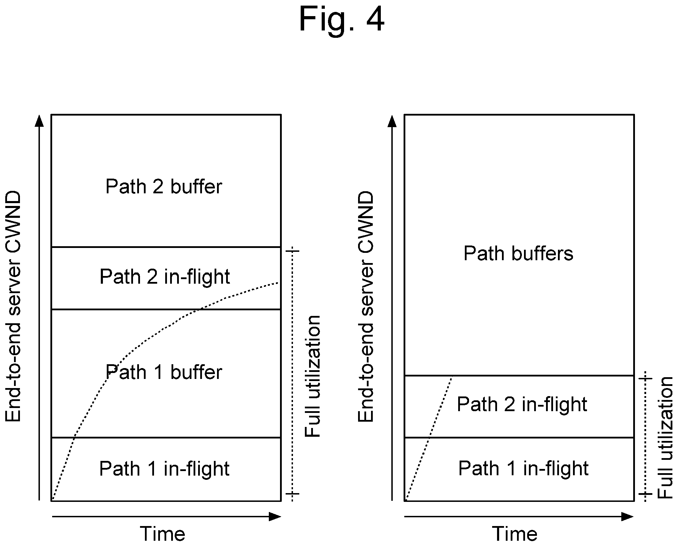

The general problem underlying the invention is illustrated in Fig. 4. Fig. 4 illustrates how the server congestion window grows over time, and which parts of the tunnel the congestion window come to occupy over time. The left graph illustrates the growth according to the conventional implementation. The outcome according to an embodiment of the invention is illustrated in the right graph. The issue is that the conventional path congestion control will fill the bottleneck buffer, often to an extent which is unhelpful. The most clear case of this is when the server uses NewReno; the problem in this case is that letting the server window move into the bottleneck buffer on path 1 will elongate the path, and thus slow down the future growth of the server congestion window. This is illustrated in Fig. 4 as a decreasing growth rate of the congestion window in the left graph. The outcome according to the invention is instead that the server window first occupies path 1, then path 2, and lastly the buffer on either paths; this is what is illustrated in the right drawing in Fig. 4.

Using, according to an embodiment, BBR or CCID5 allows for a scheduler which enable the process on the right side of Fig. 4; the main reason why is that BBR sets its congestion window in a very predictable manner; BBR will periodically drain the path of packets so that it may register the minimum RTT (RTTmin), while it will continuously register the throughput of the path (BW); BBR will set its congestion window according to equation 1 where G is a gain factor set to 2:

$$CWND = RTTmin * BW * G \qquad (1)$$

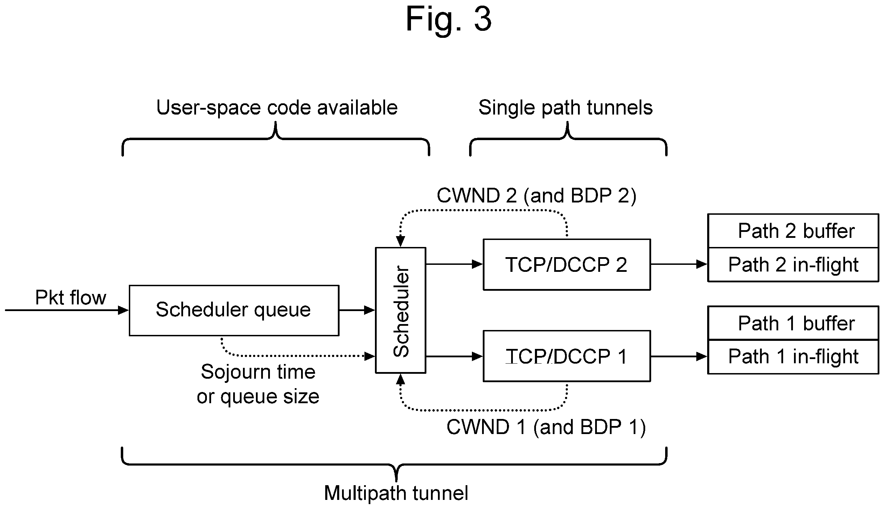

wherein $RTT_{min}$ is the minimum round-trip time, BW is the bandwidth, and G is a gain. Because the congestion window, CWND, is based on the bandwidth delay product, the multipath scheduler may adjust how deeply it wishes to fill the bottleneck buffer of each path by adjusting the CWND with some factor. Since the gain is 2, a factor of 0.5 will make for a very shallow occupation of the bottleneck buffer, while a factor of 1 will allow for the standard buffer occupancy for BBR. The main idea for the scheduler is to have it turn down its gain when there are no packets in the scheduler buffer; conversely, when there are packets in the scheduler buffer, the gain is turned up. The net effect of this mechanism is that the scheduler will favor a shallow occupancy of the primary path buffer along with utilization of the secondary path; another way of phrasing this is to say that the scheduler will tend to shorten the end-to-end pipe while also broadening it, or reduce the latency and increase the throughput. Fig. 3 illustrate the scheduler from a high level; the only information that the scheduler will need is the sojourn time of packets in the scheduling queue - or the number of packets in said queue - as well as the CWND of each path.

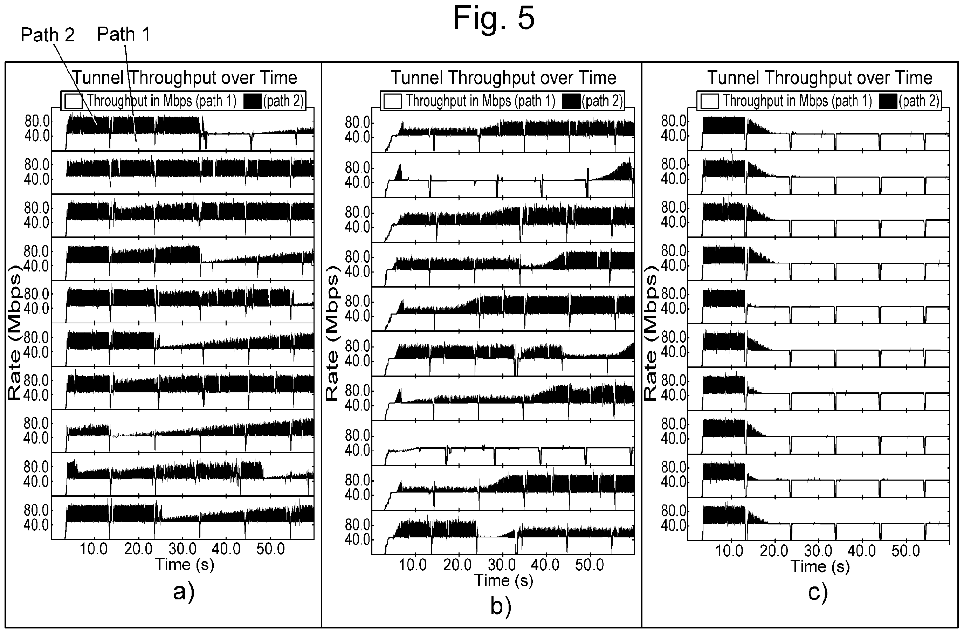

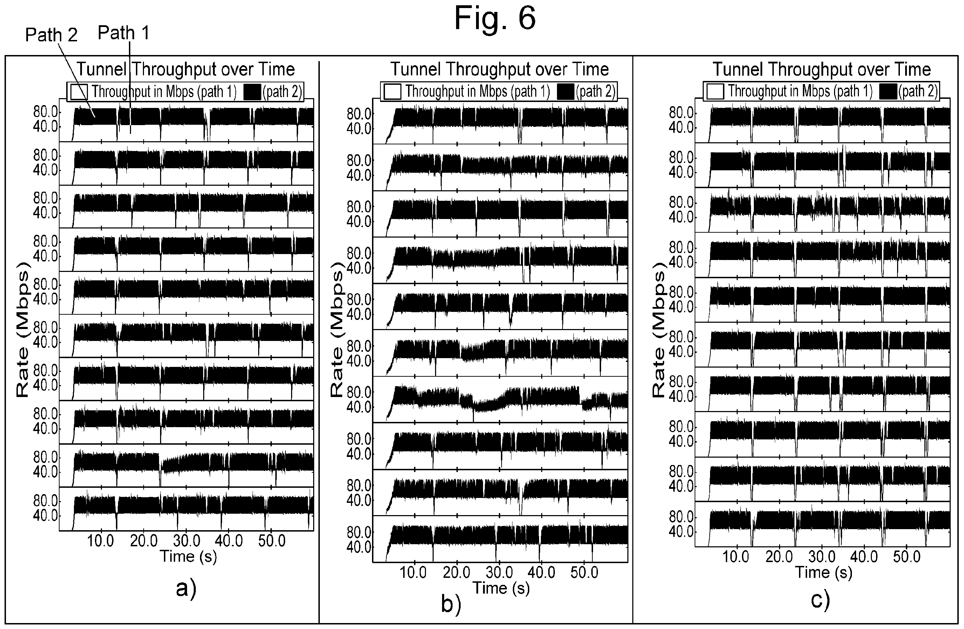

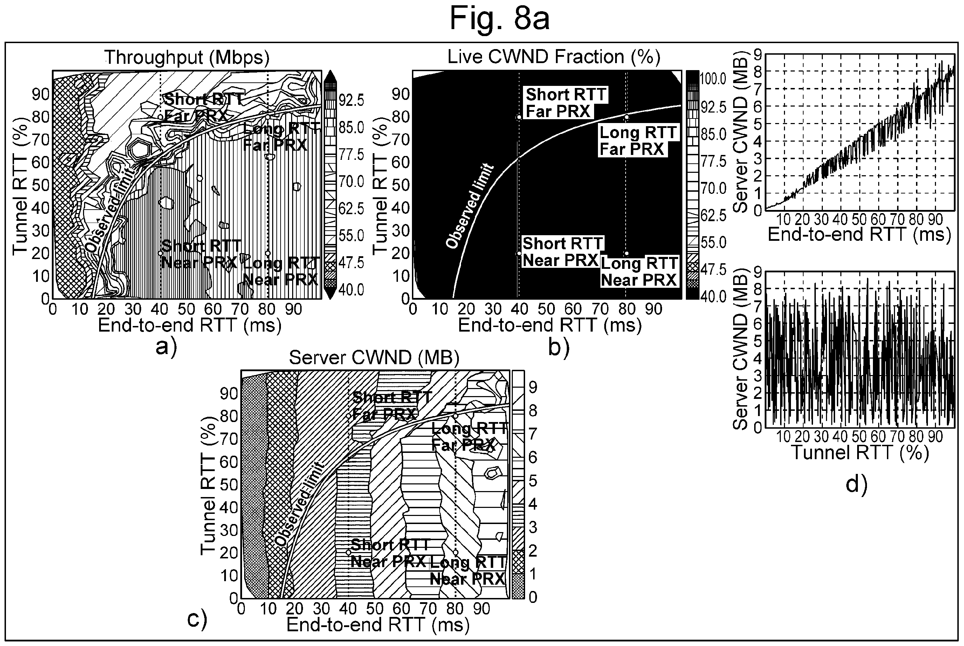

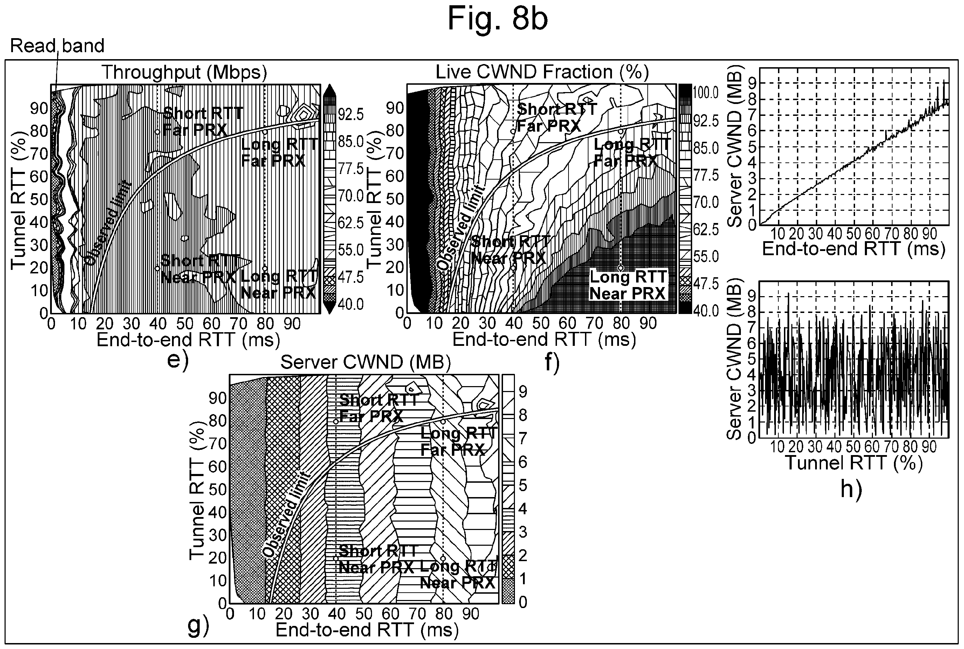

Figures 5, 6 and 8 depict results of the multi-access scheduler system and the multipath scheduler according to the invention. The improvement is, in general, quite clear; in Figures 5 and 6 the improvement is most modest in the case of TCP-Cubic; in Figure 8 the improvement is similar to when delay equalization is used with the exception of the thin "red" band following the y-axis.

Fig. 5 illustrates the results of a conventional approach. It illustrates tunnel throughput over time for downloading a file using the following server protocols: (a) TCP-NewReno; (b) TCP-Cubic; and (c) TCP-BBR. The tunnel is using BBR in all cases, and the scheduler is a conventional cheapest-pipe-first, CPF, scheduler. The RTT is 80 ms, and the tunnel rtt is 64 ms. The x-axis it time in seconds, and the y-axis is throughput in Mbps. In each illustrated row, the throughput on path 2 is shown above the throughput on path 1.

Fig. 6 illustrates the results according to the embodiments of the invention. It illustrates tunnel throughput over time for downloading a file using the following server protocols: (a) TCP-NewReno; (b) TCP-Cubic; and (c) TCP-BBR. The tunnel is using BBR in all cases, and the scheduler is configured in accordance with the present invention. RTT is 80 ms; tunnel rtt is 64 ms. The x-axis it time in seconds, and the y-axis is throughput in Mbps. In each illustrated row, the throughput on path 2 is shown above the throughput on path 1. Figure 6 clearly illustrates the balanced occupation of both paths.

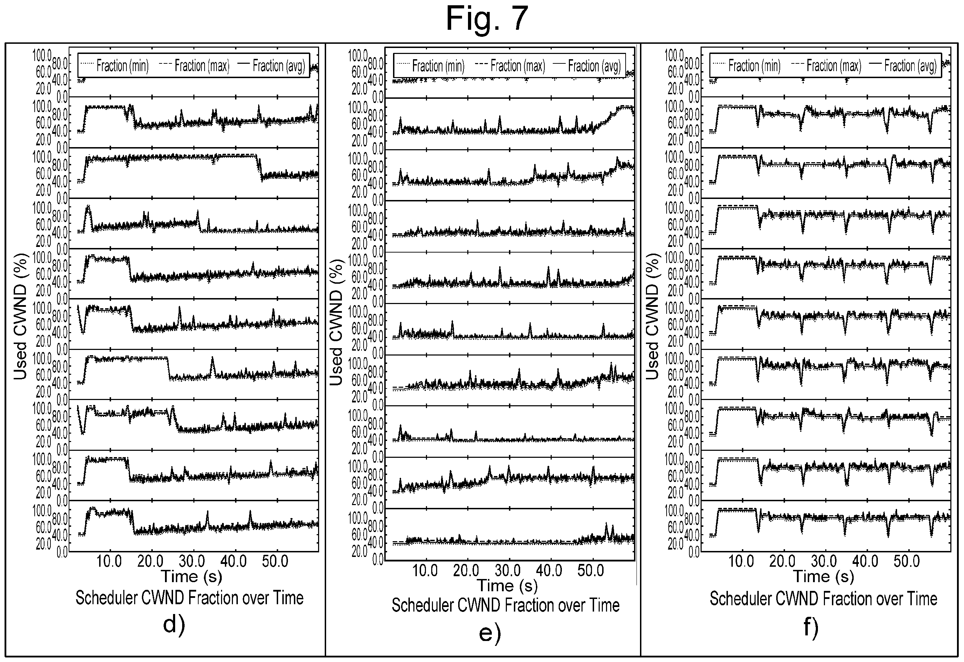

Fig. 7 illustrates the scheduler CWND fraction over time for the examples of Fig. 6. That is, it illustrates downloading a file using the following server protocol: (a) TCP-NewReno; (b) TCP-Cubic; (c) TCP-BBR. The tunnel is using BBR in all cases, and the scheduler is in accordance with the present invention. RTT is 80 ms; tunnel rtt is 64 ms.

Fig. 8a and 8b illustrate a comparison between the outcome with the standard CPF scheduler (Fig. 8a) and the scheduler in accordance with the present invention (Fig. 8b); for each case, starting from the left, illustrated is throughput (drawings a) and e)), live CWND fraction (drawings b) and f)), server CWND (drawings c) and g)), and server CWND as a function of a single variable (drawings d) and h)). The x-axis is end-to-end RTT in ms, and the left y-axis is the tunnel RTT in %. The curved line in each picture represents the theoretical limit. The dots at the vertical lines at 40 ms and 80 ms refer to a short RTT distant proxy and short RTT nearby proxy (at 40 ms) and long RTT distant proxy and long RTT nearby proxy (at 80 ms). The two diagrams at d) and h) illustrate server CWND in MB) over end-to-end RTT in ms (upper drawing) and over tunnel RTT in % (lower drawing).

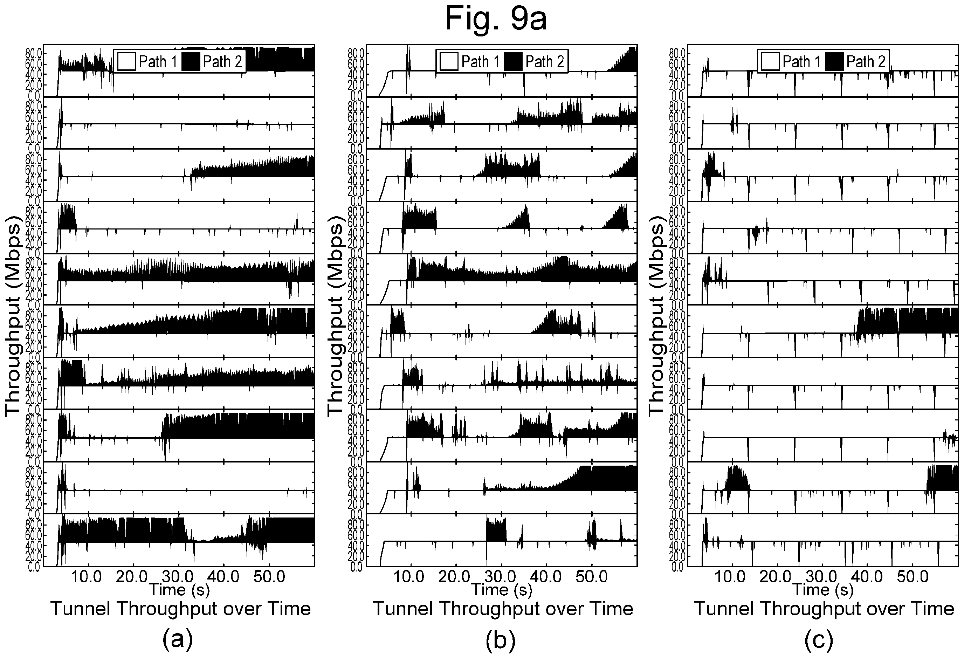

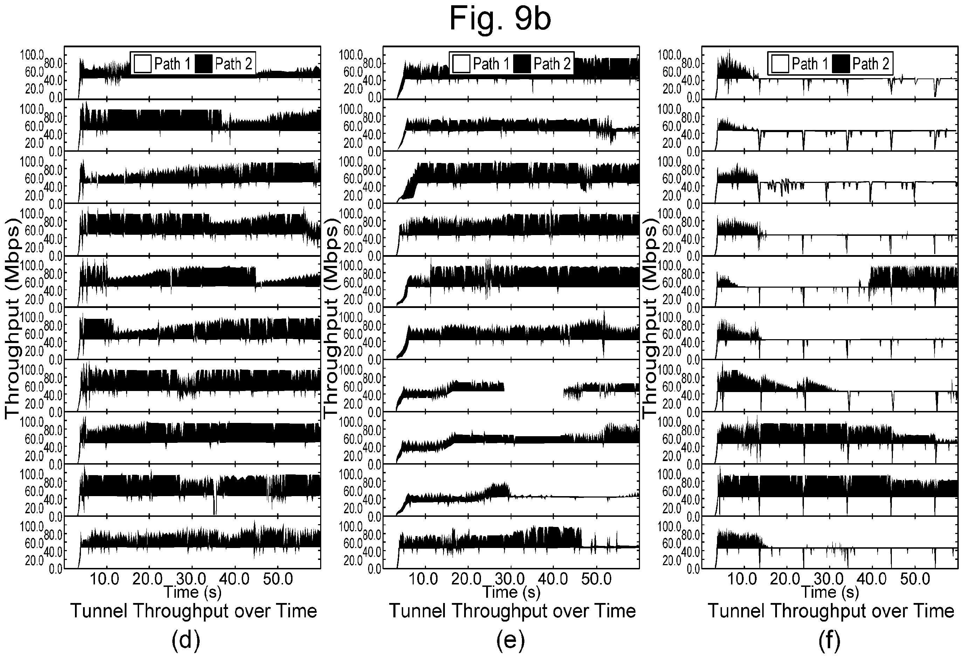

Figures 9a and 9b illustrate the results of downloading a file. Fig. 9a illustrates the results of a conventional approach, and Fig. 9b illustrates the results according embodiments of the invention. It illustrates tunnel throughput over time for downloading a file using the following server protocols: TCP-NewReno (diagrams (a) and (d)); TCP-Cubic (diagrams (b) and (e)); and TCP-BBR (diagrams (c) and (f)). The tunnel is using NewReno in all cases, and the scheduler is CPF in Fig. 9a, and is in accordance with the present invention in Fig. 9b. RTT is 40 ms; tunnel rtt is 32 ms.

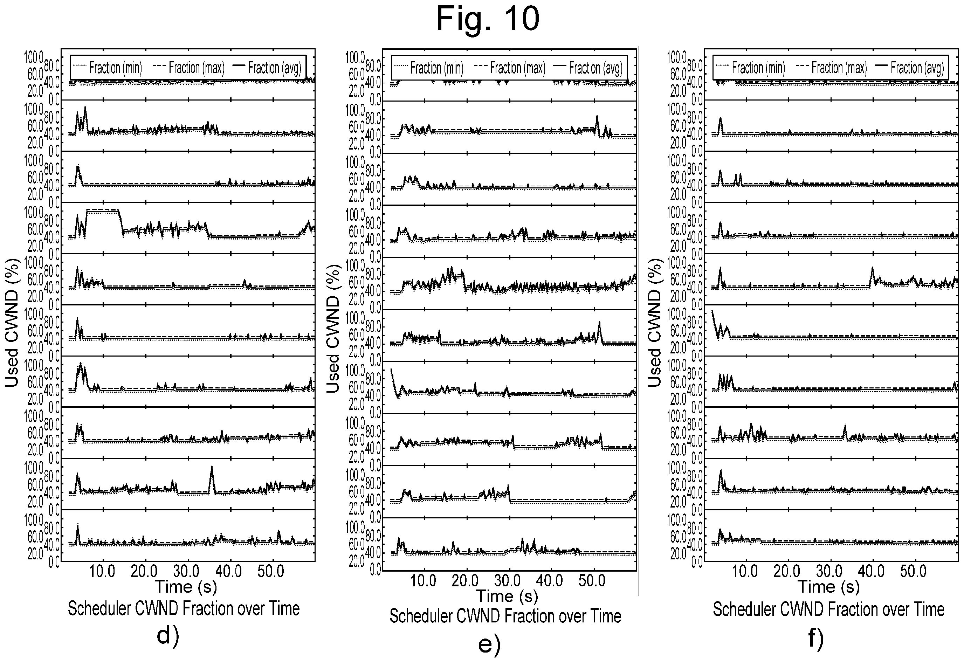

Fig. 10 illustrates the scheduler CWND fraction over time for the examples of Fig. 9. It illustrates downloading a file using the following server protocols: (a) TCP-NewReno; (b) TCP-Cubic; (c) TCP-BBR. The tunnel is using NewReno in all cases, and the scheduler is in accordance with the present invention. RTT is 40 ms; tunnel rtt is 32 ms.

Another aspect of the invention is related to a computer program product comprising program code for performing the method or the functionalities described above, when executed on a computer or a processor. The method may be implemented as program code that may be stored on a non-transitory computer medium. The computer program product may implement the techniques described above with respect to the Figures.

The methods and systems presented below may be of various types. The individual elements described may be realized by hardware or software components, for example electronic components that can be manufactured by various technologies and include, for example, semiconductor chips, ASICs, microprocessors, digital signal processors, integrated electrical circuits, electro-optical circuits and/or passive components.

The devices, systems and methods presented below are capable of transmitting information over a communication network. The term communication network refers to the technical infrastructure on which the transmission of signals takes place. The communication network essentially comprises the switching network in which the transmission and switching of the signals takes place between the stationary devices and platforms of the mobile radio network or fixed network, and the access network in which the transmission of the signals takes place between a network access device and the communication terminal. The communication network can comprise both components of a mobile radio network as well as components of a fixed network. In the mobile network, the access network is also referred to as an air interface and includes, for example, a base station (NodeB, eNodeB, radio cell) with mobile antenna to establish the communication to a communication terminal as described above, for example, a mobile phone or a mobile device with mobile adapter or a machine terminal. In the fixed network, the access network includes, for example, a DSLAM (digital subscriber line access multiplexer) to connect the communication terminals of multiple participants based on wires. Via the switching network the communication can be transferred to other networks, for example other network operators, e.g. foreign networks.

In communications and computing systems, the Open Systems Interconnection model (OSI model) defines a conceptual model that characterizes and standardizes the communication functions without regard to its underlying internal structure and technology. Its goal is the interoperability of diverse communication systems with standard protocols. The model partitions a communication system into abstraction layers. The original version of the model defined seven layers: Physical layer (Layer 1), Data Link layer (Layer 2), Network layer (Layer 3), Transport layer (Layer 4), Session layer (Layer 5), Presentation layer (Layer 6) and Application layer (Layer 7).

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

List of References

[1] A. Ford and C. Raiciu and M. Handley and O. Bonaventure, "TCP Extensions for Multipath Operation with Multiple Addresses", RFC no. 6824, January 2013

[2] Quentin Coninck and Olivier Bonaventure, "Multipath Extensions for QUIC (MP-QUIC)", draft-deconinck-quic-multipath-05, August 2020

[3] Markus Amend and Anna Brunstrom and Andreas Kassler and Veselin Rakocevic, "DCCP Extensions for Multipath Operation with Multiple Addresses", draft-amend-tsvwg-multipath-dccp-03, Nov 2019

[4] Patent "Techniques for scheduling multipath data traffic", EP3544332A1, Inventors: Markus Amend and Eckard Bogenfeld

[5] Patent "A communication device for transmitting a Transmission Control Protocol segment over a communication network using a Multipath Transmission Control Protocol", EP3579500A1, Inventors: Markus Amend and Eckard Bogenfeld

[6] Markus Amend and Eckard Bogenfeld and Anna Brunstrom and Andreas Kassler and Veselin Rakocevic, "A multipath framework for UDP traffic over heterogeneous access networks", draft-amend-tsvwg-multipath-framework-mpdccp-01, January 2020

[7] https://datatracker.ietf.org/wg/masque/about/

[8] T. Pauly and E. Kinnear and D. Schinazi, "An Unreliable Datagram Extension to QUIC", draft-pauly-quic-datagram-05, Nov 2019

[9] Wei Lu, Dandan Yu, Minghe Huang, and Bin Guo, "PO-MPTCP: Priorities-Oriented Data Scheduler for Multimedia Multipathing Services," International Journal of Digital Multimedia Broadcasting, vol. 2018, Article ID 1413026, 9 pages, 2018. https://doi.org/10.1155/2018/1413026

**Claims**

1. A multi-access scheduler system configured to receive packets from a sender and transmit packets to a receiver over a communications network, the multi-access scheduler system comprising:

a multipath scheduler configured to schedule data traffic for transmission via a first type data path having a first capacity and a second type data path having a second capacity, the first type data path comprising a first bottleneck buffer and the second type data path comprising a second bottleneck buffer, wherein:

the multipath scheduler is configured to schedule packets on the first type data path, unless the capacity of the first type data path is full;
wherein
the multipath scheduler is configured to monitor the first bottleneck buffer level; and
if the capacity of the first type data path is full and the first bottleneck buffer level starts to grow, the multipath scheduler is configured to schedule packets on the second type data path until the capacity of the second path is full.

2. The multi-access scheduler system of claim 1, wherein the multipath scheduler is configured to use a congestion window, CWND, on a per type data path basis and/or a type data path overarching manner, to control first bottleneck buffer usage.

3. The multi-access scheduler system of claim 2, wherein the multipath scheduler is configured to determine the size of the CWND by applying a factor $0 \leq F \leq 1$ to the size of the CWND based on the bandwidth delay product $RTT_{min}$ * BW * G, wherein $RTT_{min}$ is the minimum round trip time, BW is the bandwidth, and G is a gain.

4. The multi-access scheduler system of any preceding claim, further comprising a scheduler buffer, wherein the multipath scheduler is configured to monitor a status of the scheduler buffer and adapt the scheduling based on the content and/or fill level of the scheduler buffer.

5. The multi-access scheduler system of claim 1 or 2, wherein the multipath scheduler is configured to apply RTT information gained by sender and receiver signaling to determine that the capacity of the first type data path is exhausted.

6. The multi-access scheduler system of any one of claims 1 to 3, wherein the multipath scheduler is configured to:

receive, from the communications network, a congestion notification, the congestion notification indicating the presence of a growing or full bottleneck queue in the first type data path; and
switch the scheduling of packets from the first type data path to the second type data path even if the first type data path buffer is not full.

7. The multi-access scheduler system of any one of the preceding claims, wherein, if the capacity of the first type data path and the second type data path is exhausted, the multipath scheduler is configured to schedule the packets in the first bottleneck buffer of the first type data path and/or second bottleneck buffer of the second type data path.

8. The multi-access scheduler system of claim 1, wherein the fill level of the first bottleneck buffer is adjusted by a configurable threshold level, wherein when the threshold level is reached or surpassed, the multipath scheduler is configured to change the scheduling of packets from the first type data path to the second type data path.

9. A multipath scheduler device for scheduling data traffic for transmission via a first type data path having a first capacity and a second type data path having a second capacity, the first type data path comprising a first bottleneck buffer and the second type data path comprising a second bottleneck buffer, wherein

the multipath scheduler is configured to schedule packets on the first type data path, unless the capacity of the first type data path is full;
wherein
the multipath scheduler is configured to monitor the first bottleneck buffer level; and
if the capacity of the first type data path is full and the first bottleneck buffer level starts to grow, the multipath scheduler is configured to schedule packets on the second type data path until the capacity of the second path is full.

10. A method for scheduling multipath data traffic for transmission via a first type data path having a first capacity and a second type data path having a second capacity, the first type data path comprising a first bottleneck buffer and the second type data path comprising a second bottleneck buffer, the method comprising:

scheduling packets on the first type data path, unless the capacity of the first type data path is full;
wherein the method comprises:

monitoring the first bottleneck buffer level; and
if the capacity of the first type data path is full and the first bottleneck buffer level starts to grow, scheduling packets on the second type data path until the capacity of the second path is full.

11. The method of claim 10, further comprising:
using a congestion window, CWND, on a per type data path basis and/or a type data path overarching manner, to control first bottleneck buffer usage.

12. The method of claim 11, further comprising determining the size of the CWND by applying a factor $0 \leq F \leq 1$ to the size of the CWND based on the bandwidth delay product $RTT_{min} * BW * G$, wherein $RTT_{min}$ is the minimum round trip time, BW is the bandwidth, and G is a gain.

13. The method of any one of claims 10 to 12, further comprising monitoring a status of a scheduler buffer and adapt the scheduling based on the content and/or fill level of the scheduler buffer.

14. The method of claim 10 or 11, further comprising applying RTT information gained by sender and receiver signaling to determine that the capacity of the first type data path is exhausted.


**Patentansprüche**

1. Mehrfachzugriffs-Planungssystem, das konfiguriert ist, über ein Kommunikationsnetzwerk Pakete von einem Sender zu empfangen und Pakete an einen Empfänger zu senden, wobei das Mehrfachzugriffs-Planungssystem aufweist:
einen Mehrwegplaner, der konfiguriert ist, Datenverkehr zur Übertragung über einen Datenweg eines ersten Typs mit einer ersten Kapazität und einen Datenweg eines zweiten Typs mit einer zweiten Kapazität zu planen, wobei der Datenweg des ersten Typs einen ersten Engpasspuffer aufweist und der Datenweg des zweiten Typs einen zweiten Engpasspuffer aufweist, wobei:

der Mehrwegplaner konfiguriert ist, Pakete auf dem Datenweg des ersten Typs zu planen, es sei denn, die Kapazität des Datenwegs des ersten Typs ist voll;
wobei
der Mehrwegplaner konfiguriert ist, den Pegel des ersten Engpasspuffers zu überwachen; und
wenn die Kapazität des Datenwegs des ersten Typs voll ist und der Pegel des ersten Engpasspuffers zu wachsen beginnt, der Mehrwegplaner konfiguriert ist, Pakete auf dem Datenweg des zweiten Typs zu planen, bis die Kapazität des zweiten Wegs voll ist.

2. Mehrfachzugriffs-Planungssystem nach Anspruch 1, wobei der Mehrwegplaner konfiguriert ist, ein Überlastungsfenster, CWND, auf einer Pro-Typ-Datenweg-Basis und/oder einer Typ-Datenweg-übergreifenden Weise zu verwenden, um die Nutzung des ersten Engpasspuffers zu steuern.

3. Mehrfachzugriffs-Planungssystem nach Anspruch 2, wobei der Mehrwegplaner konfiguriert ist, die Größe des CWND zu bestimmen, indem er einen Faktor $0 \leq F \leq 1$ auf die Größe des CWND basierend auf dem Bandbreiten-Verzögerungsprodukt $RTT_{min} * BW * G$ anzuwenden, wobei $RTT_{min}$ die minimale Umlaufzeit ist, BW die Bandbreite ist und G eine Verstärkung ist.

4. Mehrfachzugriffs-Planungssystem nach einem der vorhergehenden Ansprüche, das ferner einen Planerpuffer aufweist, wobei der Mehrwegplaner konfiguriert ist, einen Status des Planerpuffers zu überwachen und die Planung basierend auf dem Inhalt und/oder dem Füllstand des Planerpuffers anzupassen.

5. Mehrfachzugriffs-Planungssystem nach Anspruch 1 oder 2, wobei der Mehrwegplaner konfiguriert ist, RTT-Informationen, die durch Sender- und Empfängersignalisierung gewonnen werden, anzuwenden, um zu bestimmen, dass die Kapazität des Datenwegs vom ersten Typ erschöpft ist.

6. Mehrfachzugriffs-Planungssystem nach einem der Ansprüche 1 bis 3, wobei der Mehrwegplaner konfiguriert ist:

vom Kommunikationsnetzwerk eine Überlastungsmeldung zu empfangen, wobei die Überlastungsmeldung das Vorhandensein einer wachsenden oder vollen Engpass-Warteschlange im Datenweg des ersten Typs anzeigt; und

die Planung von Paketen vom Datenweg des ersten Typs auf den Datenweg des zweiten Typs umzuschalten, selbst wenn der Puffer des Datenwegs des ersten Typs nicht voll ist.

7. Mehrfachzugriffs-Planungssystem nach einem der vorhergehenden Ansprüche, wobei der Mehrwegplaner konfiguriert ist, wenn die Kapazität des Datenwegs des ersten Typs und des Datenwegs des zweiten Typs erschöpft ist, die Pakete im ersten Engpasspuffer des Datenwegs des ersten Typs und/oder im zweiten Engpasspuffer des Datenwegs des zweiten Typs zu planen.

8. Mehrfachzugriffs-Planungssystem nach Anspruch 1, wobei der Füllstand des ersten Engpasspuffers durch einen konfigurierbaren Schwellenwert eingestellt wird, wobei, wenn der Schwellenwert erreicht oder überschritten wird, der Mehrwegplaner konfiguriert ist, die Planung von Paketen vom Datenweg des ersten Typs zum Datenweg des zweiten Typs zu ändern.

9. Mehrwegplanungsvorrichtung zum Planen von Datenverkehr zur Übertragung über einen Datenweg eines ersten Typs mit einer ersten Kapazität und einen Datenweg eines zweiten Typs mit einer zweiten Kapazität, wobei der Datenweg des ersten Typs einen ersten Engpasspuffer aufweist und der Datenweg des zweiten Typs einen zweiten Engpasspuffer aufweist, wobei

der Mehrwegplaner konfiguriert ist, Pakete auf dem Datenweg des ersten Typs zu planen, es sei denn, die Kapazität des Datenwegs des ersten Typs ist voll; wobei

der Mehrwegplaner konfiguriert ist, den Pegel des ersten Engpasspuffers zu überwachen; und wenn die Kapazität des Datenwegs des ersten Typs voll ist und der erste Engpasspufferpegel zu wachsen beginnt, der Mehrwegplaner konfiguriert ist, Pakete auf dem Datenweg des zweiten Typs zu planen, bis die Kapazität des zweiten Wegs voll ist.

10. Verfahren zum Planen von Mehrweg-Datenverkehr zur Übertragung über einen Datenweg eines ersten Typs mit einer ersten Kapazität und einen Datenweg eines zweiten Typs mit einer zweiten Kapazität, wobei der Datenweg des ersten Typs einen ersten Engpasspuffer aufweist und der Datenweg des zweiten Typs einen zweiten Engpasspuffer aufweist, wobei das Verfahren aufweist:

Planen von Paketen auf dem Datenweg des ersten Typs, es sei denn, die Kapazität des Datenwegs des ersten Typs ist voll; wobei das Verfahren aufweist:

Überwachen des Pegels des ersten Engpasspuffers; und wenn die Kapazität des Datenwegs des ersten Typs voll ist und der Pegel des ersten Engpasspuffers zu wachsen beginnt, Planen von Paketen auf dem Datenweg des zweiten Typs, bis die Kapazität des zweiten Wegs voll ist.

11. Verfahren nach Anspruch 10, das ferner aufweist:
Verwenden eines Überlastungsfensters, CWND, auf einer auf Pro-Typ-Datenweg-Basis und/oder einer Typ-Datenweg-übergreifenden Weise, um die Nutzung des ersten Engpasspuffers zu steuern.

12. Verfahren nach Anspruch 11, das ferner das Bestimmen der Größe des CWND durch Anwendung eines Faktors $0 \leq F \leq 1$ auf die Größe des CWND basierend auf dem Bandbreitenverzögerungsprodukt $RTT_{min} * BW * G$ aufweist, wobei $RTT_{min}$ die minimale Umlaufzeit, BW die Bandbreite und G eine Verstärkung ist.

13. Verfahren nach einem der Ansprüche 10 bis 12, das ferner die das Überwachen eines Status eines Planerpuffers und das Anpassen der Planung basierend auf dem Inhalt und/oder dem Füllstand des Planerpuffers aufweist.

14. Verfahren nach Anspruch 10 oder 11, das ferner das Anwenden von RTT-Informationen aufweist, die durch Sender- und Empfängersignalisierung gewonnen wurden, um festzustellen, dass die Kapazität des Datenwegs vom ersten Typ erschöpft ist.

**Revendications**

1.  Système de programmation à accès multiple configuré pour recevoir des paquets d'un expéditeur et transmettre des paquets à un récepteur via un réseau de communication, ledit système de programmation à accès multiple comprenant : un planificateur à trajets multiples configuré pour programmer le trafic de données pour une transmission via un chemin de données de premier type ayant une première capacité et un chemin de données de deuxième type ayant une deuxième capacité, le chemin de données de premier type comprenant un premier tampon de congestionnement et le chemin de données de deuxième type comprenant un deuxième tampon de congestionnement, où :

    le planificateur à trajets multiples est configuré pour planifier des paquets sur le chemin de données de premier type, sauf si la capacité du chemin de données de premier type est saturée ; où
    le planificateur à trajets multiples est configuré pour surveiller le niveau du premier tampon de congestionnement ; et,
    si la capacité du chemin de données de premier type est saturée et que le niveau du premier tampon de congestionnement commence à s'élever, le planificateur à trajets multiples est configuré pour planifier des paquets sur le chemin de données de deuxième type jusqu'à ce que la capacité du deuxième chemin soit saturée.

2.  Système de programmation à accès multiple selon la revendication 1, où le planificateur à trajets multiples est configuré pour utiliser une fenêtre de congestion, CWND, sur une base par type de chemin de données et/ou englobant les types de chemin de données, afin de commander une utilisation du premier tampon de congestionnement.

3.  Système de programmation à accès multiple selon la revendication 2, où le planificateur à trajets multiples est configuré pour déterminer la dimension de la CWND par application d'un facteur $0 \leq F \leq 1$ à la dimension de la CWND sur la base du produit délai-bande passante $RTT_{min} * BW * G$, où $RTT_{min}$ est le temps aller-retour minimal, BW la bande passante, et G un gain.

4.  Système de programmation à accès multiple selon l'une des revendications précédentes, comprenant en outre un tampon d'ordonnancement, le planificateur à trajets multiples étant configuré pour surveiller un état du tampon d'ordonnancement et adapter la planification sur la base du contenu et/ou du niveau de saturation du tampon d'ordonnancement.

5.  Système de programmation à accès multiple selon la revendication 1 ou la revendication 2, où le planificateur à trajets multiples est configuré pour appliquer des informations RTT acquises par signalisation de l'expéditeur et du récepteur afin de déterminer que la capacité du chemin de données de premier type est épuisée.

6.  Système de programmation à accès multiple selon l'une des revendications 1 à 3, où le planificateur à trajets multiples est configuré pour :

    recevoir du réseau de communication une notification de congestion, ladite notification de congestion indiquant la présence d'un congestionnement en progression ou atteint dans le chemin de données de premier type ; et
    commuter la planification de paquets du chemin de données de premier type vers le chemin de données de deuxième type même si le tampon du chemin de données de premier type n'est pas saturé.

7.  Système de programmation à accès multiple selon l'une des revendications précédentes, où, si la capacité du chemin de données de premier type et du chemin de données de deuxième type est épuisée, le planificateur à trajets multiples est configuré pour programmer les paquets dans le premier tampon de congestionnement du chemin de données de premier type et/ou le deuxième tampon de congestionnement du chemin de données de deuxième type.

8.  Système de programmation à accès multiple selon la revendication 1, où le niveau de saturation du premier tampon de congestionnement est ajusté par un niveau de seuil configurable, où, lorsque ledit niveau de seuil est atteint ou dépassé, le planificateur à trajets multiples est configuré pour passer la planification de paquets du chemin de données de premier type au chemin de données de deuxième type.

9.  Dispositif de programmation à trajets multiples, pour la programmation du trafic de données pour une transmission via un chemin de données de premier type ayant une première capacité et un chemin de données de deuxième type ayant une deuxième capacité, le chemin de données de premier type comprenant un premier tampon de congestionnement et le chemin de données de deuxième type comprenant un deuxième tampon de congestionnement, où

le planificateur à trajets multiples est configuré pour planifier des paquets sur le chemin de données de premier type, sauf si la capacité du chemin de données de premier type est saturée ; où
le planificateur à trajets multiples est configuré pour surveiller le niveau du premier tampon de congestionnement ; et,
si la capacité du chemin de données de premier type est saturée et que le niveau du premier tampon de congestionnement commence à s'élever, le planificateur à trajets multiples est configuré pour planifier des paquets sur le chemin de données de deuxième type jusqu'à ce que la capacité du deuxième chemin soit saturée.

10. Procédé de planification de trafic de données à trajets multiples pour une transmission via un chemin de données de premier type ayant une première capacité et un chemin de données de deuxième type ayant une deuxième capacité, le chemin de données de premier type comprenant un premier tampon de congestionnement et le chemin de données de deuxième type comprenant un deuxième tampon de congestionnement, ledit procédé comprenant :

la planification de paquets sur le chemin de données de premier type, sauf si la capacité du chemin de données de premier type est saturée ;
ledit procédé comprenant :

la surveillance du niveau du premier tampon de congestionnement ; et,
si la capacité du chemin de données de premier type est saturée et que le niveau du premier tampon de congestionnement commence à s'élever, la planification de paquets sur le chemin de données de deuxième type jusqu'à ce que la capacité du deuxième chemin soit saturée.

11. Procédé selon la revendication 10, comprenant en outre :
l'utilisation d'une fenêtre de congestion, CWND, sur une base par type de chemin de données et/ou englobant les types de chemin de données, afin de commander une utilisation du premier tampon de congestionnement.

12. Procédé selon la revendication 11, comprenant en outre la détermination de la dimension de la CWND par application d'un facteur $0 \leq F \leq 1$ à la dimension de la CWND sur la base du produit délai-bande passante $RTT_{min} * BW * G$, où $RTT_{min}$ est le temps aller-retour minimal, BW la bande passante, et G un gain.

13. Procédé selon l'une des revendications 10 à 12, comprenant en outre la surveillance d'un état d'un tampon d'ordonnancement et l'adaptation de la planification sur la base du contenu et/ou du niveau de saturation du tampon d'ordonnancement.

14. Procédé selon la revendication 10 ou la revendication 11, comprenant en outre l'application d'informations RTT acquises par signalisation de l'expéditeur et du récepteur afin de déterminer que la capacité du chemin de données de premier type est épuisée.

# Fig. 2

Path Manager

MPDCCP
Home Gateway

MPDCCP
Aggregation Point

**Modular Scheduler**

- RR
- Fixed Ratio
- Redundant
- SRTT
- CPF
- OTIAS

**Modular Reordering**

- Passive
- Adaptive F.
- Adaptive A.
- Delay equal.

User Client

Virtual
Network
Interface

DSL

DCCP
Tunnel
Connections

LTE

Virtual
Network
Interface

Server

Optional Bypass

DCCP Encapsulation

DCCP Decapsulation

Legend: ▬▬▬ Regular Traffic ⬚⬚⬚ DCCP Encapsulated Traffic

EP 4 080 836 B1

# Fig. 3

Fig. 3

Fig. 4

# Fig. 5

Path 2    Path 1

a)

b)

c)

EP 4 080 836 B1

Fig. 6

# Fig. 7

Fig. 8a

# Fig. 8b

Read band

Throughput (Mbps)

Short RTT Far PRX
Long RTT Far PRX
Short RTT Near PRX Long RTT Near PRX
Observed limit

e)

Live CWND Fraction (%)

Short RTT Far PRX
Long RTT Far PRX
Short RTT Near PRX
Long RTT Near PRX
Observed limit

f)

Server CWND (MB)

Short RTT Far PRX
Long RTT Far PRX
Short RTT Near PRX Long RTT Near PRX
Observed limit

g)

h)

EP 4 080 836 B1

Fig. 9a

Fig. 9b

Tunnel Throughput over Time

(d)

Tunnel Throughput over Time

(e)

Tunnel Throughput over Time

(f)

EP 4 080 836 B1

# Fig. 10

Scheduler CWND Fraction over Time

d)

Scheduler CWND Fraction over Time

e)

Scheduler CWND Fraction over Time

f)

EP 4 080 836 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3544332 A1
- EP 3579500 A1
- US 2017156078 A1
- US 2021014171 A1

**Non-patent literature cited in the description**

- **A. FORD ; C. RAICIU ; M. HANDLEY ; O. BON-AVENTURE.** TCP Extensions for Multipath Operation with Multiple Addresses. *RFC no. 6824,* January 2013
- **QUENTIN CONINCK ; OLIVIER BONAVENTURE.** Multipath Extensions for QUIC (MP-QUIC). *draft-deconinck-quic-multipath-05,* August 2020
- **MARKUS AMEND ; ANNA BRUNSTROM ; AN-DREAS KASSLER ; VESELIN RAKOCEVIC.** *draft-amend-tsvwg-multipath-dccp-03,* November 2019, vol. DCCP Extensions for Multipath Operation with Multiple Addresses
- **MARKUS AMEND ; ANNA BRUNSTROM ; AN-DREAS KASSLER ; VESELIN RAKOCEVIC.** DCCP Extensions for Multipath Operation with Multiple Addresses. *draft-amend-tsvwg-multipath-dccp-03,* November 2019
- **MARKUS AMEND ; ECKARD BOGENFELD ; AN-NA BRUNSTROM ; ANDREAS KASSLER ; VESE-LIN RAKOCEVIC.** A multipath framework for UDP traffic over heterogeneous access networks. *draft-amend-tsvwg-multipath-framework-mpdc-cp-01,* January 2020
- **T. PAULY ; E. KINNEAR ; D. SCHINAZI.** An Unreliable Datagram Extension to QUIC. *draft-pauly-quic-datagram-05,* November 2019
- **WEI LU ; DANDAN YU ; MINGHE HUANG ; BIN GUO.** PO-MPTCP: Priorities-Oriented Data Scheduler for Multimedia Multipathing Services. *International Journal of Digital Multimedia Broadcasting,* 2018, vol. 2018, 9, https://doi.org/10.1155/2018/1413026